# EUROPEAN PATENT SPECIFICATION

(11) **EP 4 396 726 B1**
(45) Date of publication and mention of the grant of the patent: **22.04.2026**
(21) Application number: 22782631.0
(22) Date of filing: 22.08.2022
(51) Int. Cl.: G06N 3/02, G06V 10/82, G06T 7/10, G06N 3/045, G06N 3/0464, G06N 3/063, G06V 20/40, G06V 20/64, G06N 3/084

(54) **PARALLEL DEPTH-WISE PROCESSING ARCHITECTURES FOR NEURAL NETWORKS**
PARALLELE TIEFENVERARBEITUNGSARCHITEKTUREN FÜR NEURONALE NETZWERKE
ARCHITECTURES DE TRAITEMENT PARALLÈLE EN PROFONDEUR POUR LES RÉSEAUX DE NEURONES

(30) Priority: 02.09.2021 US 202117465550
(43) Date of publication of application: 10.07.2024
(73) Proprietor: QUALCOMM INCORPORATED, San Diego, California 92121-1714 (US)
(72) Inventor: BADAROGLU, Mustafa, San Diego, California 92121-1714 (US); WANG, Zhongze, San Diego, California 92121-1714 (US); ATALLAH, Francois Ibrahim, San Diego, California 92121-1714 (US)
(74) Representative: Reddie & Grose LLP
(86) International application number: PCT/US2022/075255
(87) International publication number: WO 2023/034696

(56) References cited:
- US-A1- 2018 189 643
- MENG YUAN YMENG643@USC EDU ET AL: "DYNAMAP <u>Dyna</u>mic Algorithm <u>Map</u>ping Framework for Low Latency CNN Inference", PRACTICE AND EXPERIENCE IN ADVANCED RESEARCH COMPUTING, ACMPUB27, NEW YORK, NY, USA, 17 February 2021 (2021-02-17), pages 183 - 193, XP058743158, ISBN: 978-1-4503-8300-4, DOI: 10.1145/3431920.3439286
- JANG JUN-WOO ET AL: "Sparsity-Aware and Re-configurable NPU Architecture for Samsung Flagship Mobile SoC", 2021 ACM/IEEE 48TH ANNUAL INTERNATIONAL SYMPOSIUM ON COMPUTER ARCHITECTURE (ISCA), IEEE, 14 June 2021 (2021-06-14), pages 15 - 28, XP033951936, DOI: 10.1109/ISCA52012.2021.00011

## Description

### TECHNICAL FIELD

Aspects of the present disclosure relate to machine learning, and in particular, to circuits, neural-network-processing architectures, and techniques for depth-wise parallel processing for executing machine learning tasks.

### BACKGROUND

Machine learning is generally the process of producing a trained model (e.g., an artificial neural network, a tree, or other structures), which represents a generalized fit to a set of training data. Applying the trained model to new data produces inferences, which may be used to gain insights into the new data. In some cases, applying the model to the new data is described as "running an inference" on the new data.

As the use of machine learning has proliferated for enabling various machine learning (or artificial intelligence) tasks, the desire for more efficient processing of machine learning model data has grown. In some cases, dedicated hardware, such as machine learning accelerators, may be used to enhance a processing system's capacity to process machine learning model data. However, such hardware demands space and power, which is not always available on the processing device. For example, "edge processing" devices, such as mobile devices, always-on devices, Internet of Things (IoT) devices, and the like, typically have to balance processing capabilities with power and packaging constraints. Further, accelerators may move data across common data busses, which can cause significant power usage and introduce latency into other processes sharing the data bus. Consequently, other aspects of a processing system are being considered for processing machine learning model data.

US2018/189643A1 describes an operation method of a convolution circuit. The method includes receiving input feature maps, generating output feature maps corresponding to the respective input feature maps through convolution operations for performing parallel processing with a kernel unit, and outputting the output feature maps to an external memory.

MENG YUAN YMENG643@USC EDU ET AL: "DYNAMAP uDyna /umic Algorithm uMap /uping Framework for Low Latency CNN Inference", PRACTICE AND EXPERIENCE IN ADVANCED RESEARCH COMPUTING, ACMPUB27, NEW YORK, NY, USA, 17 February 2021 (2021-02-17), pages 183-193, XP058743158, DOI: 10.1145/3431920.3439286 ISBN: 978-1-4503-8300-4 describes an algorithmarchitecture co-optimization framework, DYNAMAP, consisting of (1) a unified hardware overlay that can be reused across layers, supporting dynamic mapping of all three families of popular convolution algorithms, and further allowing flexible dataflow switching to maximize hardware utilization for each layer; (2) a novel software Design Space Exploration (DSE) flow that customizes the hardware overlay and chooses optimal strategy mapping.

JANG JUN-WOO ET AL: "Sparsity-Aware and Re-configurable NPU Architecture for Samsung Flagship Mobile SoC", 2021 ACM/IEEE 48TH ANNUAL INTERNATIONAL SYMPOSIUM ON COMPUTER ARCHITECTURE (ISCA), IEEE, 14 June 2021 (2021-06-14), pages 15-28, XP033951936, DOI: 10.1109/ISCA52012.2021.00011 [retrieved on 2021-07-27] describes a flexible but efficient NPU architecture for a Samsung flagship mobile system-on-chip (SoC). To implement an efficient NPU, an energy-efficient inner-product engine that utilizes the input feature map sparsity is used. A re-configurable MAC array to enhance the flexibility of the proposed NPU, dynamic internal memory port assignment to maximize on-chip memory bandwidth utilization, and efficient architecture to support mixed-precision arithmetic are also used.

### SUMMARY

The invention is defined in the independent claims. Embodiments of the invention are set out in the dependent claims.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
**FIGs. 1A-1D** depict examples of various types of neural networks, which may be implemented by aspects of the present disclosure.
**FIG. 2** depicts an example of a traditional convolution operation, which may be implemented by aspects of the present disclosure.
**FIG. 3** is a block diagram of an example neural-network-processing architecture with tightly coupled memory (TCM) and processing elements (PEs), in which certain aspects of the present disclosure may be implemented.
**FIG. 4** illustrates processing element utilization in a neural-network-processing architecture in which different depths of an input are processed serially.
**FIG. 5** illustrates an example neural-network-processing architecture in which multiple processing element groups are configured to process a plurality of depths of a plurality of inputs in parallel, in accordance with certain aspects of the present disclosure.
**FIG. 6** illustrates an example dataflow timing diagram for processing different depths of multiple inputs in parallel, in accordance with certain aspects of the present disclosure.
**FIG. 7** is a block diagram of an example circuit for depth-wise parallel processing of an input, in accordance with certain aspects of the present disclosure.
**FIG. 8** illustrates processing element utilization in a neural-network-processing architecture in which different depths of an input are processed in parallel.
**FIG. 9** illustrates example operations that may be performed by a processing system to process a plurality of depths of an input in parallel, in accordance with certain aspects of the present disclosure.
**FIG. 10** is a block diagram illustrating an example electronic device having a neural-network-processing circuit in which a plurality of depths of an input are processed in parallel, in accordance with certain aspects of the present disclosure.

To facilitate understanding, identical reference numerals have been used, where possible, to designate identical elements that are common to the drawings. It is contemplated that elements and features of one aspect may be beneficially incorporated in other aspects without further recitation.

### DETAILED DESCRIPTION

Aspects of the present disclosure provide apparatuses, methods, processing systems, and computer-readable mediums for processing a plurality of depths of an input in parallel.

### Brief Introduction to Neural Networks, Deep Neural Networks, and Deep Learning

Neural networks are organized into layers of interconnected nodes. Generally, a node (or neuron) is where computation happens. For example, a node may combine input data with a set of weights (or coefficients) that either amplifies or dampens the input data. The amplification or dampening of the input signals may thus be considered an assignment of relative significances to various inputs with regard to a task the network is trying to learn. Generally, input-weight products are summed (or accumulated), and then the sum is passed through a node's activation function to determine whether and to what extent that signal should progress further through the network.

In a most basic implementation, a neural network may have an input layer, a hidden layer, and an output layer. "Deep" neural networks generally have more than one hidden layer.

Deep learning is a method of training deep neural networks. Generally, deep learning maps inputs to the network to outputs from the network and is thus sometimes referred to as a "universal approximator" because deep learning can learn to approximate an unknown function *f*(*x*) *= y* between any input *x* and any output *y.* In other words, deep learning finds the right *f* to transform *x* into *y.*

More particularly, deep learning trains each layer of nodes based on a distinct set of features, which is the output from the previous layer. Thus, with each successive layer of a deep neural network, features become more complex. Deep learning is thus powerful because it can progressively extract higher-level features from input data and perform complex tasks, such as object recognition, by learning to represent inputs at successively higher levels of abstraction in each layer, thereby building up a useful feature representation of the input data.

For example, if presented with visual data, a first layer of a deep neural network may learn to recognize relatively simple features, such as edges, in the input data. In another example, if presented with auditory data, the first layer of a deep neural network may learn to recognize spectral power in specific frequencies in the input data. The second layer of the deep neural network may then learn to recognize combinations of features, such as simple shapes for visual data or combinations of sounds for auditory data, based on the output of the first layer. Higher layers may then learn to recognize complex shapes in visual data or words in auditory data. Still higher layers may learn to recognize common visual objects or spoken phrases. Thus, deep learning architectures may perform especially well when applied to problems that have a natural hierarchical structure.

### Layer Connectivity in Neural Networks

Neural networks, such as deep neural networks (DNNs), may be designed with a variety of connectivity patterns between layers.

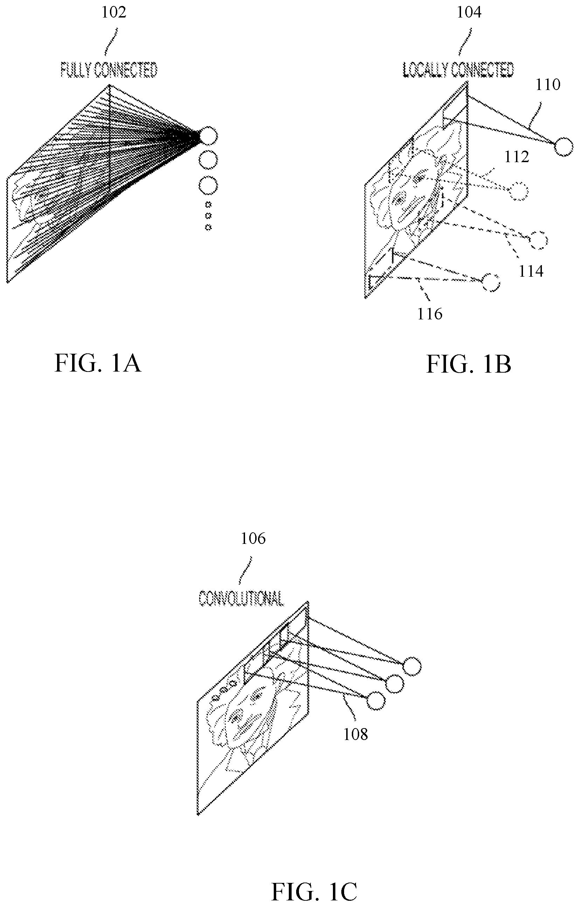

**FIG. 1A** illustrates an example of a fully connected neural network 102. In a fully connected neural network 102, each node in a first layer communicates its output to every node in a second layer, so that each node in the second layer will receive input from every node in the first layer.

**FIG. 1B** illustrates an example of a locally connected neural network 104. In a locally connected neural network 104, a node in a first layer may be connected to a limited number of nodes in the second layer. More generally, a locally connected layer of the locally connected neural network 104 may be configured so that each node in a layer will have the same or a similar connectivity pattern, but with connection strengths (or weights) that may have different values (e.g., values associated with local areas 110, 112, 114, and 116 of the first layer nodes). The locally connected connectivity pattern may give rise to spatially distinct receptive fields in a higher layer, because the higher layer nodes in a given region may receive inputs that are tuned through training to the properties of a restricted portion of the total input to the network.

One type of locally connected neural network is a convolutional neural network (CNN). **FIG. 1C** illustrates an example of a convolutional neural network 106. The convolutional neural network 106 may be configured such that the connection strengths associated with the inputs for each node in the second layer are shared (e.g., for local area 108 overlapping another local area of the first layer nodes). Convolutional neural networks are well suited to problems in which the spatial locations of inputs are meaningful.

One type of convolutional neural network is a deep convolutional network (DCN). Deep convolutional networks are networks of multiple convolutional layers, which may further be configured with, for example, pooling and normalization layers.

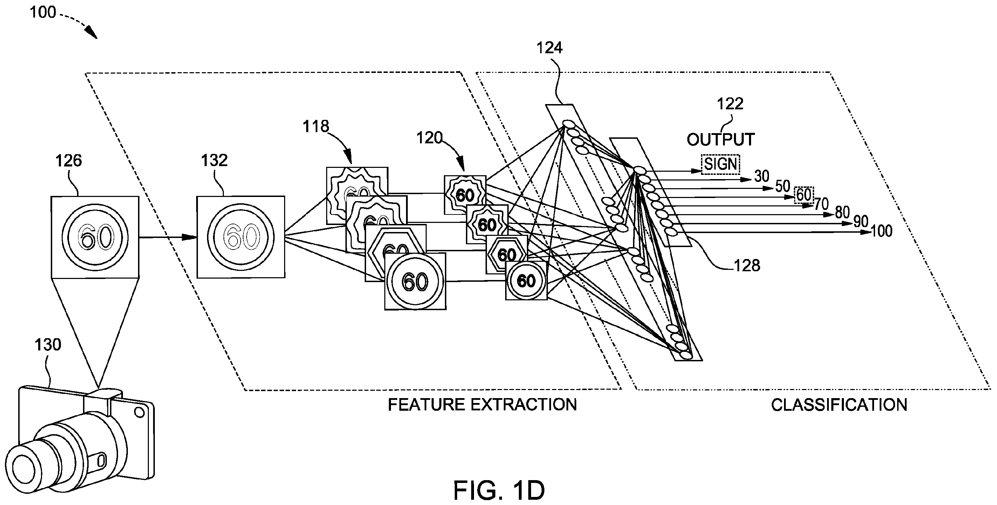

**FIG. 1D** illustrates an example of a DCN 100 designed to recognize visual features in an image 126 generated by an image-capturing device 130. For example, if the image-capturing device 130 is a camera mounted in or on (or otherwise moving along with) a vehicle, then the DCN 100 may be trained with various supervised learning techniques to identify a traffic sign and even a number on the traffic sign. The DCN 100 may likewise be trained for other tasks, such as identifying lane markings or identifying traffic lights. These are just some example tasks, and many others are possible.

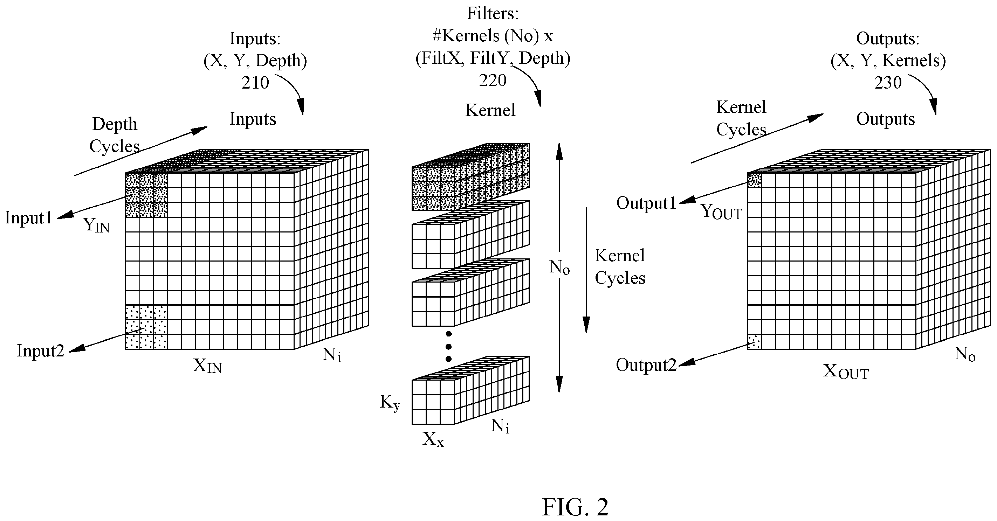

In the example of **FIG. 1D**, the DCN 100 includes a feature-extraction section and a classification section. Upon receiving the image 126, a convolutional layer 132 applies convolutional kernels (for example, as depicted and described in **FIG. 2**) to the image 126 to generate a first set of feature maps 118 (or intermediate activations). Generally, a "kernel" or "filter" comprises a multidimensional array of weights designed to emphasize different aspects of an input data channel. In various examples, "kernel" and "filter" may be used interchangeably to refer to sets of weights applied in a convolutional neural network.

The first set of feature maps 118 may then be subsampled by a pooling layer (e.g., a max pooling layer, not shown) to generate a second set of feature maps 120. The pooling layer may reduce the size of the first set of feature maps 118 while maintaining much of the information in order to improve model performance. For example, the second set of feature maps 120 may be downsampled to a 14x14 matrix from a 28x28 matrix by the pooling layer.

This process may be repeated through many layers. In other words, the second set of feature maps 120 may be further convolved via one or more subsequent convolutional layers (not shown) to generate one or more subsequent sets of feature maps (not shown).

In the example of **FIG. 1D****,** the second set of feature maps 120 is provided to a fully connected layer 124, which in turn generates an output feature vector 128. Each feature of the output feature vector 128 may include a number that corresponds to a possible feature of the image 126, such as "sign," "60," and "100." In some cases, a softmax function (not shown) may convert the numbers in the output feature vector 128 to a probability. In such cases, an output 122 of the DCN 100 is a probability of the image 126 including one or more features.

A softmax function (not shown) may convert the individual elements of the output feature vector 128 into a probability in order that an output 122 of DCN 100 is one or more probabilities of the image 126 including one or more features, such as a sign with the number "60" thereon, as in image 126. Thus, in the present example, the probabilities in the output 122 for "sign" and "60" should be higher than the probabilities of the other elements of the output 122, such as "30," "40," "50," "70," "80," "90," and "100."

Before training the DCN 100, the output 122 produced by the DCN 100 may be incorrect. Thus, an error may be calculated between the output 122 and a target output known *a priori.* For example, here the target output is an indication that the image 126 includes a "sign" and the number "60." Utilizing the known target output, the weights of the DCN 100 may then be adjusted through training so that a subsequent output 122 of the DCN 100 achieves the target output (with high probabilities).

To adjust the weights of the DCN 100, a learning algorithm may compute a gradient vector for the weights. The gradient vector may indicate an amount that an error would increase or decrease if a weight were adjusted in a particular way. The weights may then be adjusted to reduce the error. This manner of adjusting the weights may be referred to as "backpropagation" because this adjustment process involves a "backward pass" through the layers of the DCN 100.

In practice, the error gradient of weights may be calculated over a small number of examples, so that the calculated gradient approximates the true error gradient. This approximation method may be referred to as stochastic gradient descent. Stochastic gradient descent may be repeated until the achievable error rate of the entire system has stopped decreasing or until the error rate has reached a target level.

After training, the DCN 100 may be presented with new images, and the DCN 100 may generate inferences, such as classifications, or probabilities of various features being in the new image.

### Convolution Techniques for Convolutional Neural Networks

Convolution is generally used to extract useful features from an input data set. For example, in convolutional neural networks, such as described above, convolution enables the extraction of different features using kernels and/or filters whose weights are automatically learned during training. The extracted features are then combined to make inferences.

An activation function may be applied before and/or after each layer of a convolutional neural network. Activation functions are generally mathematical functions that determine the output of a node of a neural network. Thus, the activation function determines whether a node should pass information or not, based on whether the node's input is relevant to the model's prediction. In one example, where *y* = *conv*(*x*) (i.e., *y* is the convolution of *x*), both *x* and *y* may be generally considered as "activations." However, in terms of a particular convolution operation, x may also be referred to as "preactivations" or "input activations" as x exists before the particular convolution, and *y* may be referred to as output activations or a feature map.

**FIG. 2** depicts a three-dimensional convolution in which an input 210 is organized into a three-dimensional space and processed using a plurality of convolution kernels 220 to generate outputs 230. Input 210 may be a three-dimensional input, such as a three-dimensional image with spatial data in each of the three dimensions (e.g., the *X* (horizontal) dimension, the *Y* (vertical) dimension, and the *Z* (depth) dimension), or a sequence of two-dimensional images (having *X* (horizontal) and *Y* (vertical) dimensions) over time (e.g., video), where time may correspond to the Z (depth) dimension. In this particular example, a 12-pixel by 12-pixel image having some number *n* of depth cycles may be processed through a corresponding convolution kernel 220 having dimensions of 3 pixels by 3 pixels by *n* depth cycles. The output 230 may have the same size along the *X* and *Y* dimensions and a depth dimension corresponding to the number of convolution kernels 220 used to process the input 210.

An output stationary technique, in which outputs of a neural network remain stored in memory associated with a processing element, may allow for rapid generation of output 230. Generally, using output-stationary techniques involves depth cycles (corresponding to different kernels from the plurality of convolution kernels 220) being located in an inner loop of a multi-loop logical structure, where the outer loop of the multi-loop logical structure is used to iterate over the *X* and *Y* dimensions. Output-stationary techniques, however, may allow for accumulator circuits to be reused over the depth cycles for a given input in the *X* and *Y* dimensions. However, each depth cycle generally entails reloading weights associated with that depth cycle into a processing element used to process the depth cycle. Further, when a kernel is updated, the inputs in the *X* and *Y* dimensions may be reloaded into one or more processing elements and processed. Some processing techniques may support weight-stationary processing of an input. In such a case, an input in the *X* and *Y* dimensions may be iterated over within the inner loop of a multi-loop structure.

### Example Neural-Network-Processing Architectures and Dataflow

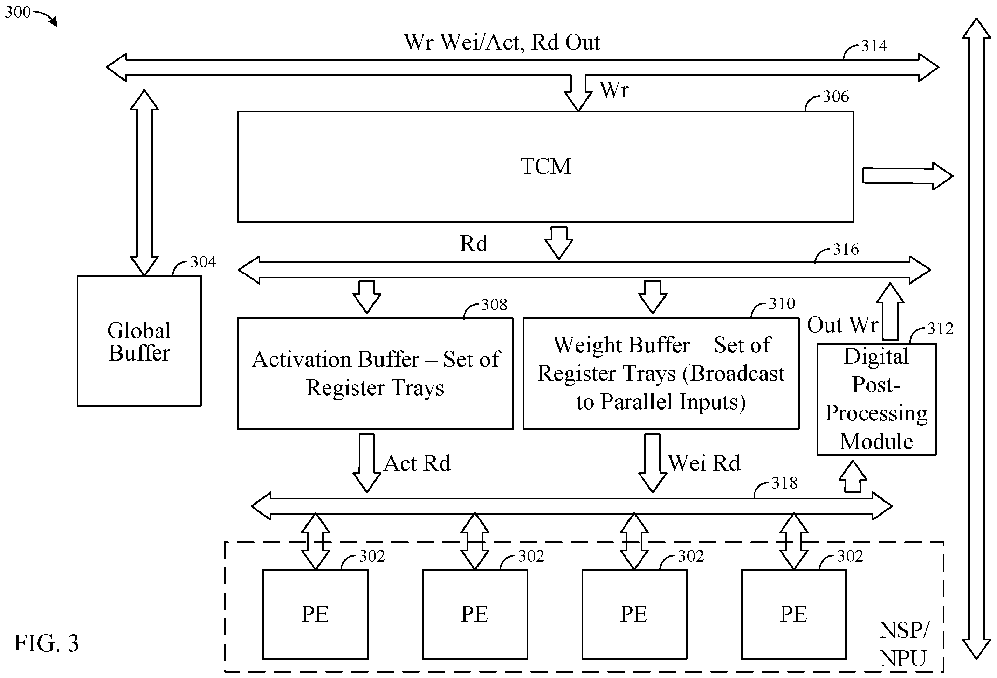

**FIG. 3** is a block diagram of an example neural-network-processing architecture 300, illustrating an example dataflow sequence, in which certain aspects of the present disclosure may be implemented. The neural-network-processing architecture 300 may include a plurality of processing elements (PEs) 302 for performing data computation (e.g., multiply-and-accumulate (MAC) operations) and other operations. The PEs 302 may be implemented with any of various suitable circuits, such as neural processing units (NPUs), neural signal processors (NSPs), or compute-in-memory (CIM) circuits. The processing architecture 300 may also include a global memory 304 (labeled "Global Buffer"), a tightly coupled memory (TCM) 306, an activation buffer 308, a weight buffer 310, a digital post-processing module 312, a memory bus 314, a register bus 316, and a PE bus 318. As used herein, a TCM generally refers to a memory accessed by a dedicated connection from the processor(s), such as the PEs 302. The activation buffer 308 and weight buffer 310 may each be structured as sets of register trays. The data stored in the weight buffer 310 may be broadcast to parallel inputs (e.g., inputs processed in parallel by the PEs 302). The memory bus 314 may couple the global memory 304 to the TCM 306. The register bus 316 may couple the TCM 306 to the activation buffer 308, weight buffer 310, and digital post-processing module 312. The PE bus 318 may couple the PEs 302 to the activation buffer 308, weight buffer 310, and digital post-processing module 312. In this manner, the PEs 302 may access the various memory resources to read data from the activation buffer 308 and/or weight buffer 310 and output a result of processing the data read from the activation buffer 308 and/or weight buffer 310 to the digital post-processing module 312.

### Example Parallel Processing of Depths of an Input

Parallel processing generally allows for multiple portions or segments of an input to be processed by a processing unit, such as a neural signal processor (NSP) or neural processing unit (NPU), substantially at the same time. Generally, parallel processing may leverage the independence of various inputs to accelerate processing of a set of inputs and complete execution of an operation on a set of inputs using fewer compute resources (e.g., time) and/or more efficient usage of compute resources (e.g., a proportion of used compute resources to total compute resources available in a computing system) than would be used in serial processing of the set of inputs. Typically, NSPs or NPUs may be designed to support input parallelism for different portions of an input (e.g., defined chunks of a two-dimensional input, such as a block of pixels in an image) and to process these portions of the input at different depths (e.g., different channels or times) sequentially (e.g., using different kernel (depth) cycles, as discussed above with respect to **FIG. 2**). That is, for input portion indices {1, 2, 3, ..., *n*} and a depth of *m,* these NSPs or NPUs may be designed to process values at input portion indices {1, 2, 3, ..., *n*} at depth 1, then values at input portion indices {1, 2, 3, ..., *n*} at depth 2, and so on, up to depth *m.* Because these NSPs or NPUs may be designed to support depth-sequential processing, the capabilities of these NSPs or NPUs may not be fully utilized. Further, increases in the depth of a neural network may compound the effect of not fully utilizing the processing capabilities of an NSP or NPU, thus negatively impacting performance metrics of these NSPs or NPUs as the depth of a neural network increases. For example, given some maximum number of operations per second that an NSP or NPU could support when all processing elements (PEs) in the NSP or NPU are used, the number of operations per second that the NSP or NPU can support when using depth-sequential processing may be significantly lower.

To allow for increased performance, processing elements in an NSP or NPU may be designed to support an increased activation depth. However, increasing the activation depth supported by a processing element may reduce mapping flexibility, reduce clock frequency, and/or reduce the number of inputs that can be processed in parallel using the same hardware resources.

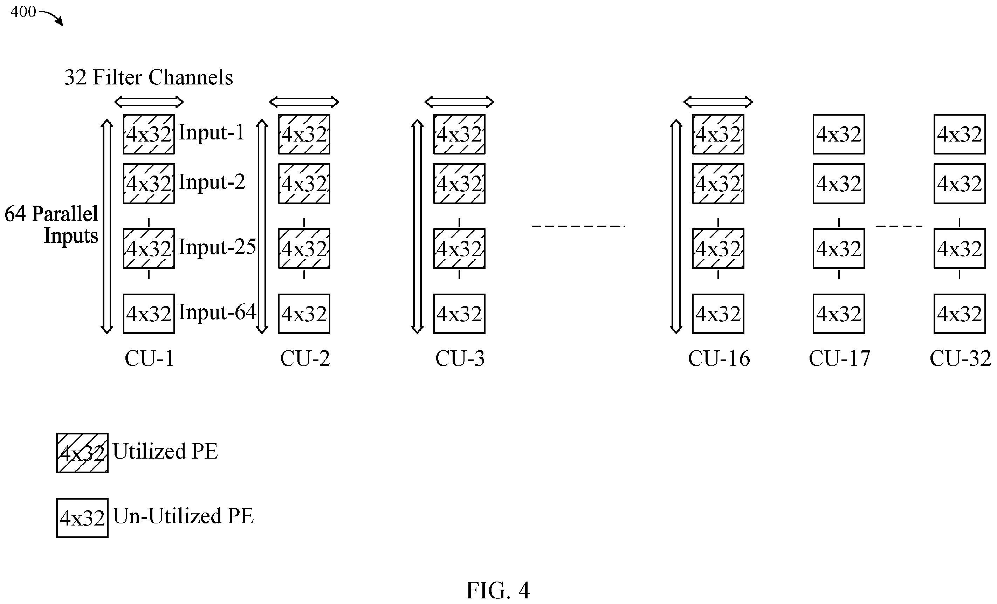

**FIG. 4** illustrates an example 400 of processing element utilization in a neural-network-processing architecture in which an input is processed serially at different depths in a neural network. In example 400, the architecture may support input parallelism and filter channel parallelism such that multiple segments of an input (e.g., in the X and Y dimension as shown in **FIG. 2**) can be processed in parallel using multiple filters in parallel, but may not support depth parallelism in which the same segment of an input can be processed at different depths in the neural network (e.g., using different kernels). As illustrated, the architecture in example 400 may have 32 computing units (labeled "CU-1" through "CU-32"), and each of these computing units may include 64 processing elements (PEs) that can be used to process portions of an input provided to the architecture in parallel. Each PE may be configured to process 4 activations and 32 filter channels. In this example, a layer of a ResNet50 network may have an input tensor of size 7x7x512 and a number of corresponding kernel tensors of size 3x3x512. For any 7x7 input channel, 25 operations may be performed to convolve 25 different, though potentially overlapping, receptive fields with a 3x3 kernel using a stride distance of 1. In this example, a 5x5 feature map may be generated as the output of this layer. Input segments 1 through 25 may be processed through the corresponding processing elements in computing units 1 through 16 of the architecture, as shown. However, because the architecture may not support depth-wise parallelism, computing resources that could be used for processing inputs at another depth may instead be left unused.

Thus, in example 400, a significant amount of computing resources may be unused, and performance may not be scalable. For example, resource utilization may be calculated as the product of a number of computing units over which a problem is executed, a number of inputs, a number of activations, and a number of filter channels. In this example, as discussed, a problem may be defined according to the following parameters: depth = 512, InputX = 7, InputY = 7, FilterX = 3, FilterY = 3, StrideX = 1, and StrideY = 1. As illustrated, there are four activations and 32 filter channels for each PE, and 25 input segments processed over 16 computing units out of 32 computing units since 512 filter channels are mapped over 16 computing units where each computing unit has 32 filter channels; and 25 input segments are mapped over 25 out of 128 activation inputs. There is no further utilization of remaining 16 out of 32 computing units because the architecture used in example 400 does not support depth-wise parallelism. A number of depth cycles executed to complete this problem may be calculated as FilterX * FilterY * Depth / Activations = 3 * 3 * 512 / 4 = 1152 depth cycles, and the utilization efficiency compared to a maximum theoretical usage may be (16 * 25 * 4 * 32)/(32 * 64 * 4 * 32) = 20%. Further, because the utilization efficiency is low, the number of operations supported over a given period of time may similarly be less than a maximum theoretical number of operations supported over this given period of time assuming full utilization of the resources of the architecture.

Aspects of the present disclosure provide techniques for performing depth-wise parallel processing of input portions in a neural-network-processing architecture. By allowing for both input parallelism and depth parallelism, aspects of the present disclosure may allow for increased utilization of computing resources (e.g., processing elements) in such an architecture. Thus, the techniques described herein may improve inference performance by a neural-network-processing architecture, as increased utilization of available computing resources in the architecture may result in an increased number of operations that can be performed by the architecture relative to architectures that are designed to support depth-sequential processing.

Further, aspects of the present disclosure provide a scalable processing architecture that allows for various types of parallel processing to be implemented for any given workload. The processing architectures described herein may allow for a choice of processing a workload using parallel inputs, parallel kernels, or parallel depths. Further, because (a portion of) an input may be processed in parallel at different depths, aspects of the present disclosure may reduce the number of processing cycles needed to process a number of depth cycles in a neural network.

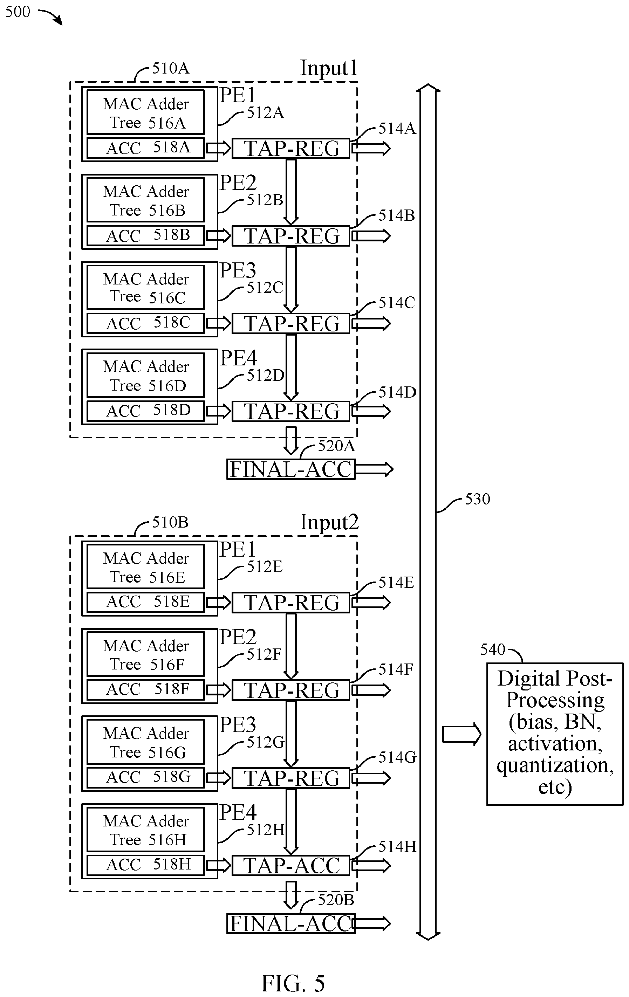

**FIG. 5** illustrates an example of a neural-network-processing architecture 500 in which multiple processing element groups are configured to process a plurality of portions of an input at a plurality of depths in parallel, in accordance with certain aspects of the present disclosure. Generally, the portions of the input may be defined by a tiling pattern used to divide the input. Tiling patterns with smaller numbers of tiles may generally divide an input into larger sub-portions, while tiling patterns with larger numbers of tiles may generally divide an input into smaller sub-portions. The choice of tiling pattern used in dividing the input into different portions for processing may represent a tradeoff between performance of and accuracy of inferences generated by the neural network. Using larger numbers of tiles may allow for data to be processed in the neural network at a more granular level, but with greater computational expense, while using smaller numbers of tiles (and correspondingly, larger sub-portions of an input) may allow for data to be processed in the neural network at a lesser computational expense, but with a higher degree of generality.

As illustrated, neural-network-processing architecture 500 may include a plurality of processing element groups 510 configured to process a plurality of inputs (or portions of an input) at a plurality of depths in parallel. In this example architecture, two processing element groups 510A and 510B are shown, although the reader is to understand that there may be more than two processing element groups. Each processing element group 510 may include a plurality of processing elements 512, and the output of each processing element may be output to an associated tap register 514. In this example, processing element group 510A includes four processing elements 512A-512D, and processing element group 510B includes four processing elements 512E-512H, although the reader is to understand that each processing element group may include more or less than four processing elements. As illustrated, each processing element 512 includes a multiply-and-accumulate (MAC) circuit 516 and a local accumulator 518 having an input coupled to an output of the MAC circuit. The output of the local accumulator 518 in a processing element 512 may be coupled to an input of the corresponding tap register 514. In some aspects, the MAC circuit 516 may include a plurality of multiplier circuits configured to generate partial products based on multiplying input values with weight values, and the local accumulator 518 may be implemented as an adder circuit configured to combine the partial products generated by the individual multipliers in the MAC circuit 516 into a local sum.

Generally, the tap registers 514 within a processing element group 510 may be coupled such that the output of one tap register 514 serves as an input to another tap register 514. The output of a final tap register (e.g., tap register 514D or 514H) within a processing element group 510 may be coupled to an input of a global accumulator circuit 520 (also referred to as a "final accumulator" and labeled "FINAL-ACC"). For each depth cycle processed in parallel, a given tap register 514 may be configured to shift the data provided as input from a predecessor tap register 514 concurrently with a multiply-and-accumulate operation performed by a processing element 512 corresponding to the given tap register 514. For example, tap register 514B may be configured to shift the data provided as input from tap register 514A concurrently with an operation performed by processing element 512B.

An output of the global accumulator circuit 520 may be coupled to a bus 530 connecting the processing element groups 510 with digital post-processing logic 540. Generally, the value of the global accumulator circuit 520 may be used by the digital post-processing logic 540 in further processing the input data from which the value of the global accumulator circuit 520 was generated (e.g., biasing, batch normalization (BN), linear/non-linear thresholding, quantization, etc.). In some aspects, the outputs of the tap registers 514 may also be coupled to the bus 530. Bus 530 may be, in such a case, an addressable bus allowing the digital post-processing logic 540 to selectively obtain data placed on bus 530 by the global accumulator circuits 520 (and tap registers 514).

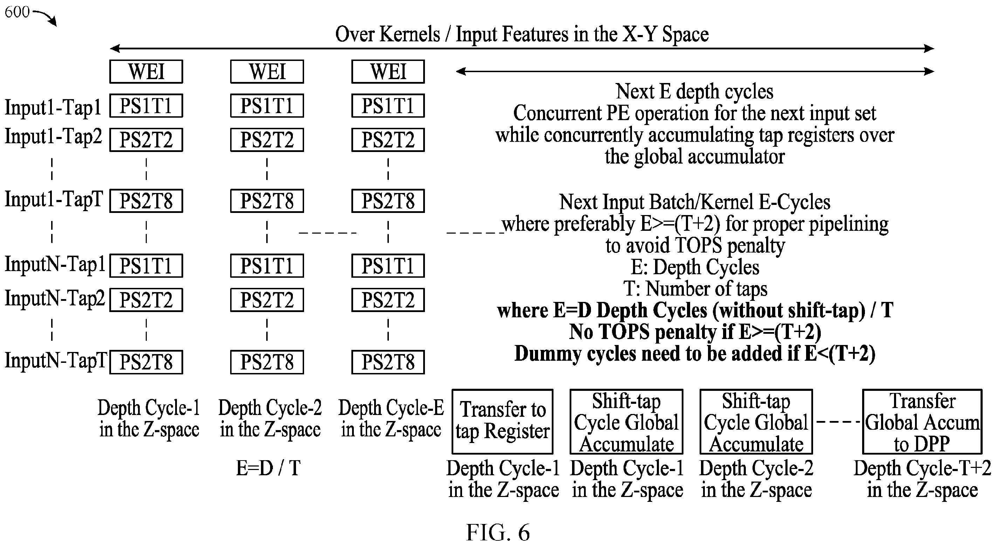

**FIG. 6** **i**llustrates an example dataflow timing diagram 600 for processing different depths of multiple inputs in parallel, in accordance with certain aspects of the present disclosure. In this example, an input may be defined as a portion of a larger input data set, such as data values at a set of coordinates in a three-dimensional space having *X, Y,* and *Z* axes, where the depth dimension corresponds to the *Z* axis in the three-dimensional space. As illustrated in the timing diagram 600, processing architecture 500 supports processing a plurality of inputs over a plurality of depth cycles in the *Z* axis in parallel. Generally, each depth cycle may be associated with a set of weights used in calculating a result at that depth cycle defined in the model.

As illustrated, over a number *E* of depth cycles, portions of an input may be processed concurrently. For example, over the *E* depth cycles, portions of an input located at the same location in a first and second dimension and different locations in a third dimension may be processed concurrently. Values stored in the tap registers for the input may be accumulated over the global accumulator (e.g., through a serial shift) as these inputs are processed. After a given depth cycle is executed, the value stored in the global accumulator may be output to digital post-processing logic for further use. To minimize negative impacts on the number of operations over a time period supported by a neural-network-processing architecture, the number *T* of taps (e.g., 8 taps, as illustrated in **FIG. 6**) may be determined (e.g., calculated or selected) based on the number of depth cycles *E* over which a portion of the input is provided and processed in parallel. For example, where *E* = total depth cycles *D* / number of taps *T,* there may be little or no negative impact to the processing capabilities of the neural-network-processing architecture (e.g., few or no unused processing elements) when *E* > *T +* 2. In cases where *E* < *T +* 2, dummy cycles may be added to minimize negative impacts on the number of operations over a time period supported by the neural-network-processing architecture.

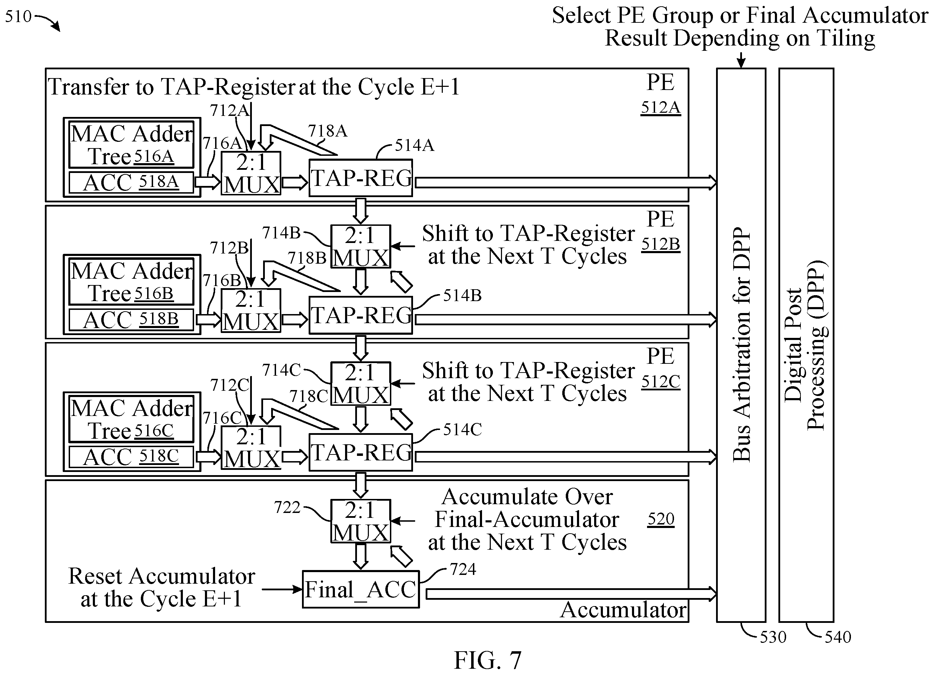

**FIG. 7** is a block diagram of an example circuit for depth-wise parallel processing of an input portion, in accordance with certain aspects of the present disclosure. The example circuit in **FIG. 7** includes a more detailed version of the processing elements 512 in **FIG. 5**. As illustrated in **FIG. 7****,** a processing element group 510 of a neural-network-processing circuit configured to concurrently process a plurality of depths of an input portion may include a plurality of processing elements 512 and a global accumulator circuit 520. The neural-network-processing circuit may include multiple processing element groups 510, and each processing element group 510 in the neural-network-processing circuit may be configured to process a different portion of the input at the plurality of depths.

Each processing element 512, as illustrated, generally includes a multiply-and-accumulate (MAC) circuit 516 (e.g., a MAC adder tree) and a local accumulator 518. Generally, the MAC circuit 516 can generate a result of a mathematical operation on a given input and output the result of the mathematical operation to local accumulator 518. The output of local accumulator 518 may be provided as an input, along with the value stored in a corresponding tap register 514, to a selection circuit 712. The selection circuit 712 may be, for example, a multiplexer circuit (e.g., a 2:1 multiplexer in which one of two values input into the multiplexer is output based on the value of a selector control signal), a tri-state buffer, a plurality of switches, or other circuitry that allows for the selection of either the output value 716 from the local accumulator 518 or the output value 718 from the tap register 514 to be output to the input of the tap register 514. Generally, when the local accumulator 518 finishes calculating the final accumulation result at the end of *E* depth cycles (e.g., after *E* depth cycles are processed), the selector control signal may control the selection circuit 712 to select the output of the local accumulator 518 as the input into the tap register 514. That is, the selector control signal may go to a high value when the number of depth cycles reaches *E*. Otherwise, the selection circuit 712 can select the current value of the tap register 514 as the input of the tap register 514 to preserve the data currently stored in the tap register.

At some processing elements 512, a second selection circuit 714 may be used to impact the value stored in the tap register 514. The second selection circuit 714 may be used, for example, in processing elements subsequent to an initial processing element used for an input at a first depth cycle. That is, for an input at a first depth cycle processed by initial processing element 512A, subsequent processing elements 512B and 512C (and other processing elements subsequent to the processing element 512A) may use a respective second selection circuit 714 to impact the value stored in the respective tap register 514 for the processing element. Like selection circuit 712, the second selection circuit 714 may be implemented, for example, by a multiplexer circuit (e.g., a 2:1 multiplexer in which one of two values input into the multiplexer is output based on the value of a selector input), a tri-state buffer, a plurality of switches, or other circuitry that allows for the selection of one of a plurality of values. A control signal, such as a signal to shift out the value of the tap register 514 over a number of depth cycles equal to the number of taps *T*, may be used to control the value stored in the tap register 514. The value selected by the second selection circuit 714 may be the current value of the tap register 514 or the value of a tap register 514 in a predecessor processing element (e.g., as illustrated, at processing element 512B, the output of the tap register 514A of processing element 512A). For processing elements 512B and 512C, thus, the tap register 514B (and 514C) may have a first input coupled to an output of selection circuit 712B (and 712C) and a second input coupled to an output of second selection circuit 714B (and 714C).

Global accumulator circuit 520 includes a selection circuit 722 and a global accumulator 724. The selection circuit 722 may take, as input, the current value in the global accumulator 724 and the output of the tap register 514 associated with the last processing element used to process the input at a defined number of depths (e.g., as illustrated, tap register 514C associated with processing element 512C). A selector input into selection circuit 722 may be used to set the value of global accumulator 724 such that the value stored in global accumulator 724 is accumulated over a number of depth cycles. Generally, after *E* cycles are processed (e.g., at depth cycle *E*+1), the value stored in global accumulator 724 may be output to bus 530, and the global accumulator circuit 520 may be reset.

Bus 530 generally is coupled with an output of one or more tap registers 514 associated with the one or more processing elements 512 and an output of a global accumulator 724 in the accumulator circuit 520. Generally, bus 530 may arbitrate data requests from and data dispatch to digital post-processing logic 540. For example, bus 530 may select which outputs to make available to digital post-processing logic 540 based on the tiling defined for a neural network executing on the neural-network-processing circuit. The values made available to the digital post-processing logic 540 through bus 530 may thus include one or more of a value output by a processing element 512, outputs output by a plurality of processing elements 512, and/or a value stored in global accumulator 724 and output to bus 530.

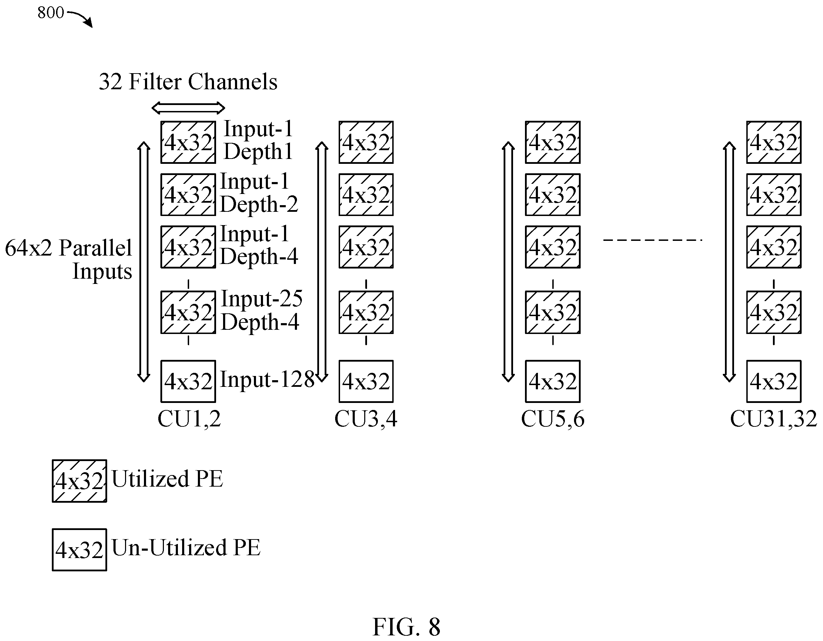

**FIG. 8** illustrates an example 800 of processing element utilization in a neural-network-processing architecture in which different depths of a portion of an input are processed in parallel. As illustrated, a plurality of computing units may be aggregated to support processing of the portion of the input at multiple depths. In this example, for a computing unit supporting 64 input portions, two computing units may be aggregated to form a virtual computing unit supporting 128 inputs. Each processing element may process an input using four activations and 32 filter channels. As illustrated, 25 portions of an input (e.g., 25 different segments of an image) may be processed in parallel at four different depths (e.g., based on a ResNet 50 layer having an input tensor of size 7x7x512 and a number of corresponding kernel tensors of size 3x3x512 and convolving 25 different fields). Because the input portions can be processed in parallel at different depths of the neural network, a significantly smaller number of processing element circuits may be unused relative to the number of unused processing element circuits illustrated in **FIG. 4****.** In this example, a problem processed using the neural-network-processing architectures described herein in which different depths of an input may be processed in parallel may be defined according to the parameters discussed above with respect to **FIG. 4** (e.g., depth = 512, InputX = 7, InputY = 7, FilterX = 3, FilterY = 3, StrideX = 1, and StrideY = 1). The number of clock cycles over which the problem is processed may be defined as FilterX * FilterY * Depth/Activations = 3 * 3 * 512 / 4 / 5 = 231 cycles, or about 20% of the number of cycles used in depth-sequential processing discussed above. The utilization efficiency compared to a maximum theoretical usage may be (32* 50 * 4 * 32)/(32 * 64 * 4 * 32) = 78%. Further, the number of operations per second may be significantly increased relative to the number of operations per second that can be performed in depth-sequential processing of inputs through a neural processing architecture operating at the same clock rate. Thus, as illustrated, fewer computing resources may be wasted by processing inputs using depth parallelism, and the overall performance of a neural processing architecture may be improved over the performance of a neural processing architecture that processes inputs using depth-serial processing.

### Example Operations

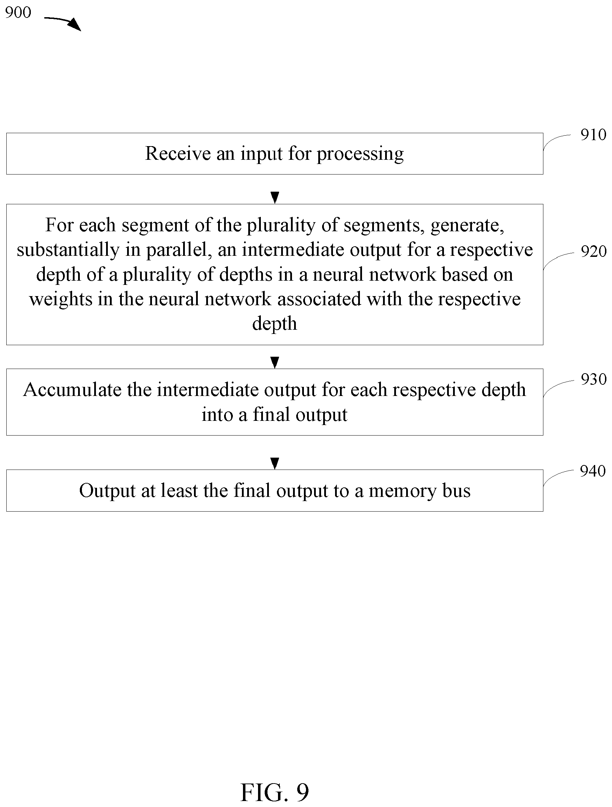

**FIG. 9** is a flow diagram illustrating example operations 900 for neural network processing, in accordance with certain aspects of the present disclosure. The operations 900 may be performed, for example, by a neural-network-processing circuit, such as the neural-network-processing architecture 500 of **FIG. 5** or **FIG. 7****.**

Operations 900 may begin at block 910 by receiving an input for processing. The input may be a multidimensional array of data or a multidimensional tensor which may be segmented for parallel processing in a neural network.

In some aspects, the input may include data corresponding to a three-dimensional space. A first dimension in the three-dimensional space may correspond to a horizontal dimension. A second dimension in the three-dimensional space may correspond to a vertical dimension. A third dimension in the three-dimensional space may correspond to a depth dimension. For example, the three-dimensional space may be a Euclidean space in which data is represented in terms of height, width, and depth dimensions, such as data from a three-dimensional image of an object. In another example, the three-dimensional space may include spatial data on a two-dimensional plane, with the third dimension corresponding to a temporal channel in the input. This three-dimensional data may include, for example, video data, audio data, or other information in which time is a dimension.

In some aspects, the input may include a plurality of segments. For example, the segments may be sized such that that the same portions of the input can be processed in parallel, or substantially in parallel, at different depths of a neural network. Each segment of the plurality of segments may be, for example, a same block of pixels (e.g., in terms of horizontal and vertical coordinates) in different images corresponding to different depths in a three-dimensional image or to different timestamps in temporal data (e.g., different frames in a video). In some aspects, the plurality of segments may be based on a tiling used to define how a neural network is to process the input. Each segment of the plurality of segments may represent a sub-portion, or tile, of the input, the size of which may be defined by the number of tiles into which the input is divided. For example, for a number *i* of tiles, an image input with *X* pixels on the horizontal axis and *Y* pixels on the vertical axis may be divided into tiles of size (*X* * *Y*)/*i* pixels.

At block 920, for a segment of the plurality of segments of the input, an intermediate output is generated, substantially in parallel, at each of a plurality of depths in the neural network. The intermediate output may be generated based on weights in a neural network associated with filter or kernel used to process a portion of an input at a given depth in the neural network.

In some aspects, generating the intermediate output may include generating the intermediate output through a multiply-and-accumulate (MAC) circuit. The value generated by the MAC circuit may be stored in a tap register. In some aspects, generating the intermediate output may further include shifting a value in the tap register during each of a plurality of processing cycles.

At block 930, for the segment of the plurality of segments of the input, each intermediate output is accumulated into a final output. In some aspects, accumulating the intermediate outputs into a final output may include accumulating shifted values from tap registers associated with each of the respective values over a plurality of processing cycles. As discussed, the plurality of processing cycles may correspond to the number of depths being processed in parallel in a neural processing unit.

At block 940, at least the final output is output to a memory bus. In some aspects, the final output may be output to the memory bus based on a signal indicating that processing has been completed for a threshold number of depth cycles. By outputting the final output to the memory bus based on this signal, incomplete data may not be placed on the bus.

As discussed, the memory bus may be a selective bus that allows for selective dispatch or availability of data to a digital post processing block for further use. In some aspects, each intermediate output may also be output to the memory bus. The memory bus may selectively make values available to the digital post-processing block based, for example, on information about how an input is tiled for processing in a neural network.

### Example Device with Depth-Parallel Processing

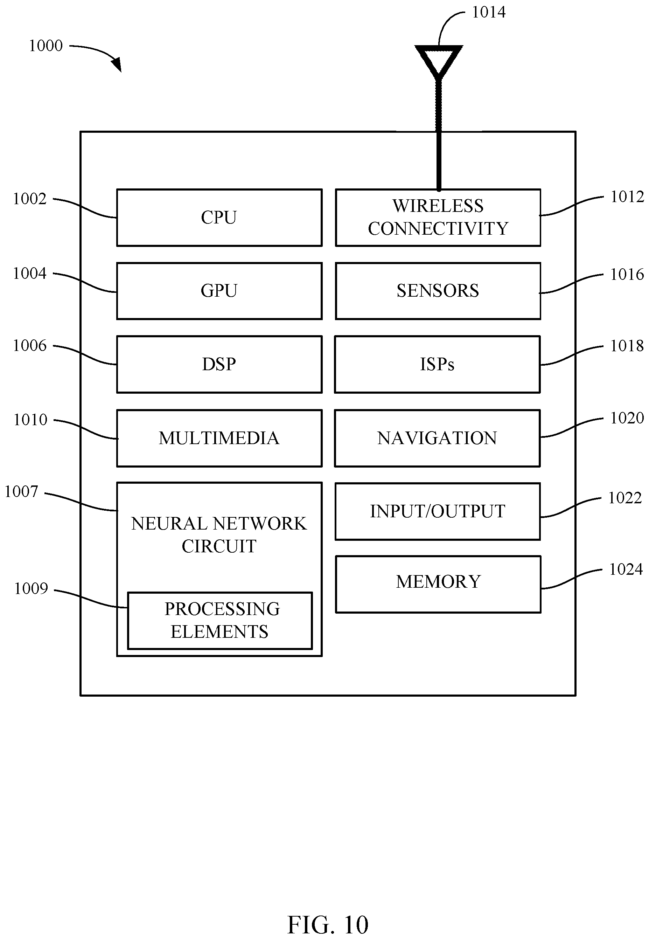

**FIG. 10** illustrates an example electronic device 1000. The electronic device 1000 may be configured to perform the methods described herein, including the operations 900 described with respect to **FIG. 9****.**

The electronic device 1000 includes a central processing unit (CPU) 1002, which in some aspects may be a multi-core CPU. Instructions executed at the CPU 1002 may be loaded, for example, from a program memory associated with the CPU 1002 or may be loaded from a memory 1024.

The electronic device 1000 also includes additional processing blocks tailored to specific functions, such as a graphics processing unit (GPU) 1004, a digital signal processor (DSP) 1006, a neural network circuit 1007 with a set of PEs 1009 to implement depth-parallel processing of inputs to the neural network circuit, a multimedia processing block 1010, and a wireless connectivity processing block 1012. In one implementation, the neural network circuit 1007 is implemented in one or more of the CPU 1002, GPU 1004, and/or DSP 1006.

In some aspects, the wireless connectivity processing block 1012 may include components, for example, for Third-Generation (3G) connectivity, Fourth-Generation (4G) connectivity (e.g., 4G LTE), Fifth-Generation connectivity (e.g., 5G or NR), Wi-Fi connectivity, Bluetooth connectivity, and/or wireless data transmission standards. The wireless connectivity processing block 1012 is further connected to one or more antennas 1014 to facilitate wireless communication.

The electronic device 1000 may also include one or more sensor processors 1016 associated with any manner of sensor, one or more image signal processors (ISPs) 1018 associated with any manner of image sensor, and/or a navigation processor 1020, which may include satellite-based positioning system components (e.g., Global Positioning System (GPS) or Global Navigation Satellite System (GLONASS)), as well as inertial positioning system components.

The electronic device 1000 may also include one or more input and/or output devices 1022, such as screens, touch-sensitive surfaces (including touch-sensitive displays), physical buttons, speakers, microphones, and the like. In some aspects, one or more of the processors of the electronic device 1000 may be based on an Advanced RISC Machines (ARM) instruction set, where RISC stands for "reduced instruction set computing."

The electronic device 1000 also includes memory 1024, which is representative of one or more static and/or dynamic memories, such as a dynamic random access memory (DRAM), a flash-based static memory, and the like. In this example, memory 1024 includes computer-executable components, which may be executed by one or more of the aforementioned processors of the electronic device 1000, including the neural network circuit 1007. The depicted components, and others not depicted, may be configured to perform various aspects of the methods described herein.

In some aspects, such as where the electronic device 1000 is a server device, various aspects may be omitted from the example depicted in **FIG. 10****,** such as one or more of the multimedia processing block 1010, wireless connectivity processing block 1012, antenna(s) 1014, sensor processors 1016, ISPs 1018, or navigation processor 1020.

### Additional Considerations

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the generic principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining, and the like. Also, "determining" may include receiving (e.g., receiving information), accessing (e.g., accessing data in a memory), and the like. Also, "determining" may include resolving, selecting, choosing, establishing, and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. Example means-plus-function components may include means for receiving, means for generating, means for accumulating, and means for outputting, among others. The means for receiving may include an input/output block, such as the input/output block 1012 depicted in **FIG. 10****,** a wireless communications block (e.g., transceiver), such as the wireless communication block 1012 depicted in **FIG. 10****,** among others. The means for generating may include one or more processors or processing circuits, such as the neural network circuit 1007 and/or processing elements 1009 illustrated in **FIG. 10****.** The means for accumulating may include one or more processors or processing circuits, such as the neural network circuit 1007 and/or processing elements 1009 portrayed in **FIG. 10****.** The means for outputting may include an input/output block, such as the input/output block 1012 depicted in **FIG. 10****,** a wireless communications block (e.g., transceiver), such as the wireless communication block 1012 depicted in **FIG. 10****,** among others.

The following claims are not intended to be limited to the aspects shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. § 112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A processing circuit (500) comprising a plurality of groups of processing element, PE, circuits (510), wherein:
each group of PE circuits (510) comprises a plurality of PE circuits (512) configured to process in parallel an input at a plurality of depths and a global accumulator circuit (520), and
each PE circuit (512) comprises:
one or more multiplication circuits (516) , each multiplication circuit (516) being configured to calculate a partial product,
a local accumulator (518) having an input coupled to an output of the one or more multiplication circuits (516), the local accumulator (518) being configured to generate a sum from the partial product calculated by each of the one or more multiplication circuits (516); and
a tap register (514) coupled to the output of the local accumulator (518) and to one or more tap registers (514) of other PE circuits (512) in the group of PE circuits (510) such that the tap registers (514) in each group of PE circuits (510) are serially connected;
wherein the output of a final tap register (514D) in the serially connected tap registers (514) of each group of PE circuits (510) is coupled to an input of the global accumulator circuit (520) of that group of PE circuits (510);
wherein each tap register (514) is configured to shift the output received from the coupled local accumulator (518) and any output received from a coupled tap register (514) concurrently through the serially connected tap registers (514); and
wherein the global accumulator circuit (520) accumulates values received from the serially connected tap registers (514) and outputs the accumulated value when a given depth cycle is executed.

2. The processing circuit of claim 1, further comprising a bus, wherein another output of the tap register in each PE circuit is coupled to the bus.

3. The processing circuit of claim 2, wherein an output of the global accumulator is further coupled to the bus.

4. The processing circuit of claim 1, wherein the plurality of PE circuits is further configured to process in parallel a plurality of inputs at a plurality of depths.

5. A method for a processing circuit (5100) comprising a plurality of groups of processing element, PE, circuits, each group of PE circuits comprising a plurality of PE circuits (510) configured to process in parallel an input at a plurality of depths and a global accumulator circuit (520), the method comprising:
calculating a partial product by one or more multiplication circuits (516) of a PE circuit (512) of the plurality of PE circuits (510);
generating a sum from the partial product calculated by each of the one or more multiplication circuits (516);
receiving, at a tap register (514), the generated sum and an output from a preceding tap register (514) in a plurality of serially connected tap registers (514) of the PE circuit (512); and
concurrently shifting the received generated sum and the received output from the tap register (514) to a succeeding tap register (514) in the plurality of serially connected tap registers (514) of the group of PE circuits (510); wherein the method further comprises, at a global accumulator circuit (520) coupled to a final tap register (514D) in the plurality of serially connected tap registers (514):
accumulating values received from the serially connected tap registers (514); and
outputting the accumulated value when a given depth cycle is executed.

## Patentansprüche

1. Verarbeitungsschaltung (500) mit mehreren Gruppen von PE-(Processing Element)-Schaltungen (510), wobei:
jede Gruppe von PE-Schaltungen (510) mehrere zum parallelen Verarbeiten eines Eingangs in mehreren Tiefen konfigurierte PE-Schaltungen (512) und eine globale Akkumulator-Schaltung (520) umfasst, und
jede PE-Schaltung (512) Folgendes umfasst:
eine oder mehrere Multiplikationsschaltungen (516), wobei jede Multiplikationsschaltung (516) zum Berechnen eines Teilprodukts konfiguriert ist,
einen lokalen Akkumulator (518) mit einem Eingang, der mit einem Ausgang der ein oder mehreren Multiplikationsschaltungen (516) gekoppelt ist, wobei der lokale Akkumulator (518) zum Erzeugen einer Summe aus dem von jeder der ein oder mehreren Multiplikationsschaltungen (516) berechneten Teilprodukt konfiguriert ist; und
ein Abgriffregister (514), das mit dem Ausgang des lokalen Akkumulators (518) und mit einem oder mehreren Abgriffregistern (514) anderer PE-Schaltungen (512) in der Gruppe von PE-Schaltungen (510) gekoppelt ist, so dass die Abgriffregister (514) in jeder Gruppe von PE-Schaltungen (510) in Reihe geschaltet sind;
wobei der Ausgang eines letzten Abgriffregisters (514D) der in Reihe geschalteten Abgriffregister (514) jeder Gruppe von PE-Schaltungen (510) mit einem Eingang der globalen Akkumulator-Schaltung (520) dieser Gruppe von PE-Schaltungen (510) gekoppelt ist;
wobei jedes Abgriffregister (514) zum Verschieben des vom gekoppelten lokalen Akkumulator (518) empfangenen Ausgangs und jedes von einem gekoppelten Abgriffregister (514) empfangenen Ausgangs gleichzeitig durch die in Reihe geschalteten Abgriffregister (514) konfiguriert ist; und
wobei die globale Akkumulatorschaltung (520) von den in Reihe geschalteten Abgriffregistern (514) empfangene Werte akkumuliert und den akkumulierten Wert ausgibt, wenn ein bestimmter Tiefenzyklus ausgeführt wird.

2. Verarbeitungsschaltung nach Anspruch 1, die ferner einen Bus umfasst, wobei ein weiterer Ausgang des Abgriffregisters in jeder PE-Schaltung mit dem Bus gekoppelt ist.

3. Verarbeitungsschaltung nach Anspruch 2, wobei ein Ausgang des globalen Akkumulators ferner mit dem Bus gekoppelt ist.

4. Verarbeitungsschaltung nach Anspruch 1, wobei die mehreren PE-Schaltungen zusätzlich zum parallelen Verarbeiten mehrerer Eingänge in mehreren Tiefen konfiguriert sind.

5. Verfahren für eine Verarbeitungsschaltung (5100), die mehrere Gruppen von PE-(Processing Element)-Schaltungen umfasst, wobei jede Gruppe von PE-Schaltungen mehrere zum parallelen Verarbeiten eines Eingangs in mehreren Tiefen konfigurierte PE-Schaltungen (510) sowie eine globale Akkumulator-Schaltung (520) umfasst, wobei das Verfahren Folgendes beinhaltet:
Berechnen eines Teilprodukts durch eine oder mehrere Multiplikationsschaltungen (516) einer PE-Schaltung (512) der mehreren PE-Schaltungen (510);
Erzeugen einer Summe aus dem durch jede der ein oder mehreren Multiplikationsschaltungen (516) berechneten Teilprodukt;
Empfangen, an einem Abgriffregister (514), der erzeugten Summe und eines Ausgangs von einem vorherigen Abgriffregister (514) in mehreren in Reihe geschalteten Abgriffregistern (514) der PE-Schaltung (512); und
gleichzeitiges Verschieben der empfangenen erzeugten Summe und des empfangenen Ausgangs aus dem Abgriffregister (514) zu einem nachfolgenden Abgriffregister (514) der mehreren in Reihe geschalteten Abgriffregister (514) der Gruppe von PE-Schaltungen (510);
wobei das Verfahren ferner an einer globalen Akkumulatorschaltung (520), die mit einem letzten Abgriffsregister (514D) der mehreren in Reihe geschalteten Abgriffsregister (514) gekoppelt ist, Folgendes beinhaltet:
Akkumulieren von von den in Reihe geschalteten Abgriffsregistern (514) empfangenen Werten; und
Ausgeben des akkumulierten Werts, wenn ein vorgegebener Tiefenzyklus ausgeführt wird.

## Revendications

1. Circuit de traitement (500) comprenant une pluralité de groupes de circuits d'éléments de traitement, PE, (510), dans lequel :
chaque groupe de circuits de PE (510) comprend une pluralité de circuits de PE (512) configurés pour traiter en parallèle une entrée à une pluralité de profondeurs et un circuit d'accumulateur global (520), et
chaque circuit de PE (512) comprend :
un ou plusieurs circuits de multiplication (516), chaque circuit de multiplication (516) étant configuré pour calculer un produit partiel,
un accumulateur local (518) ayant une entrée couplée à une sortie des un ou plusieurs circuits de multiplication (516), l'accumulateur local (518) étant configuré pour générer une somme à partir du produit partiel calculé par chacun des un ou plusieurs circuits de multiplication (516) ; et
un registre de prise (514) couplé à la sortie de l'accumulateur local (518) et à un ou plusieurs registres de prises (514) d'autres circuits de PE (512) dans le groupe de circuits de PE (510) de telle sorte que les registres de prises (514) dans chaque groupe de circuits de PE (510) soient connectés en série ;
dans lequel la sortie d'un registre de prise final (514D) dans les registres de prises connectés en série (514) de chaque groupe de circuits de PE (510) est couplée à une entrée du circuit d'accumulateur global (520) de ce groupe de circuits de PE (510) ;
dans lequel chaque registre de prise (514) est configuré pour décaler simultanément la sortie reçue de l'accumulateur local couplé (518) et toute sortie reçue d'un registre de prise couplé (514) à travers les registres de prises connectés en série (514) ; et
dans lequel le circuit d'accumulateur global (520) accumule des valeurs reçues des registres de prises connectés en série (514) et délivre en sortie la valeur accumulée lorsqu'un cycle de profondeur donné est exécuté.

2. Circuit de traitement selon la revendication 1, comprenant en outre un bus, dans lequel une autre sortie du registre de prise dans chaque circuit de PE est couplée au bus.

3. Circuit de traitement selon la revendication 2, dans lequel une sortie de l'accumulateur global est couplée en outre au bus.

4. Circuit de traitement selon la revendication 1, dans lequel la pluralité de circuits de PE est configurée en outre pour traiter en parallèle une pluralité d'entrées à une pluralité de profondeurs.

5. Procédé pour un circuit de traitement (5100) comprenant une pluralité de groupes de circuits d'éléments de traitement, PE, chaque groupe de circuits de PE comprenant une pluralité de circuits de PE (510) configurés pour traiter en parallèle une entrée à une pluralité de profondeurs et un circuit d'accumulateur global (520), le procédé comprenant :
le calcul d'un produit partiel par un ou plusieurs circuits de multiplication (516) d'un circuit de PE (512) de la pluralité de circuits de PE (510) ;
la génération d'une somme à partir du produit partiel calculé par chacun des un ou plusieurs circuits de multiplication (516) ;
la réception, au niveau d'un registre de prise (514), de la somme générée et d'une sortie d'un registre de prise précédent (514) dans une pluralité de registres de prises connectés en série (514) du circuit de PE (512) ; et
le décalage simultané de la somme reçue générée et de la sortie reçue du registre de prise (514) vers un registre de prise suivant (514) dans la pluralité de registres de prises connectés en série (514) du groupe de circuits de PE (510) ;
le procédé comprenant en outre, au niveau d'un circuit d'accumulateur global (520) couplé à un registre de prise final (514D) dans la pluralité de registres de prises connectés en série (514) :
l'accumulation de valeurs reçues à partir des registres de prises connectés en série (514) ; et
la délivrance en sortie de la valeur accumulée lorsqu'un cycle de profondeur donné est exécuté.
